# EUROPEAN PATENT SPECIFICATION

(11) **EP 0 451 596 B1**
(45) Date of publication and mention of the grant of the patent: **19.07.1995**
(21) Application number: 91104716.5
(22) Date of filing: 26.03.1991
(51) Int. Cl.: C07F 9/38

(54) **Phosphonylation process**
Phosphonylationsprozess
Procédé de phosphonylation

(30) Priority: 12.04.1990 GB 9008405
(43) Date of publication of application: 16.10.1991
(73) Proprietor: ALBRIGHT & WILSON LIMITED, Oldbury, Warley, West Midlands B69 4PR (GB)
(72) Inventor: Ellis, James William, Woodloes Park, Warwick CV34 5Yz (GB); Hoye, Peter Albert Theodore, Kinver, Stourbridge DY7 6LL (GB)
(74) Representative: Savidge, Roger Gordon Madgwick

(56) References cited:
- DE-A- 3 142 517
- US-A- 3 300 337

## Description

This invention relates to a phosphonylation process for the production of phosphono organo carboxylic acids, especially carboxy ethyl phosphonic acid.

Carboxy ethyl phosphonic acid, also known as 3-phosphonopropionic acid, has been described as a flame retardant for polyesters and also as a corrosion inhibitor. It may be made in a multi-step process by reacting diethyl phosphite with ethyl acrylate. Reacting acrylic acid, phosphorous acid and phosphorus trichloride as taught by DE-OS-3142517 gives the desired product, but in modest yield and mixed with a predominant amount of a hydroxy organo triphosphonic acid.

We have now discovered a simple process giving the phosphono organo carboxylic acids in high yield.

Accordingly, the present invention provides a process for the production of a phosphono organo carboxylic acid, characterised by:
(a) A reaction stage, wherein an unsaturated carboxylic acid [or an alkali metal salt, a quaternary ammonium salt or an anhydride of said acid] is heated with a chlorophosphorus reaction product selected from:
   (i) phosphorus trichloride and
   (ii) a reaction product of phosphorus trichloride with a compound, other than phosphorous acid, containing active hydrogen
   to produce a mixture including a phosphono organo carboxylic acid chloride; and
(b) a hydrolysis stage, wherein said mixture is treated with an aqueous medium to produce said phosphono organo carboxylic acid.

The unsaturated carboxylic acid may have the general formula R²CH = CR¹CO₂H, wherein R¹ is hydrogen or C₁ - C₆ alkyl (eg, methyl or ethyl) and R² is hydrogen, C₁ - C₆ alkyl or C₆ - C₁₈ aryl (eg, methyl, ethyl or phenyl) or a carboxyl group. The unsaturated carboxylic acid may be eg, maleic, crotonic or methacrylic acid, but acrylic acid is especially preferred.

Instead of the free carboxylic acid, the sodium salt or a liquid quaternary ammonium salt such as the tetrabutyl ammonium salt may be used.

When the unsaturated carboxylic acid is used in the form of its anhydride, the anhydride may be, for example, a mixed anhydride, a symmetrical anhydride (such as acrylic anhydride) or a cyclic anhydride (such as maleic anhydride).

When the chlorophosphorus reaction product is made by reacting phosphorus trichloride with a compound containing active hydrogen, the compound containing active hydrogen may be an hydroxy compound, a thiol, an amino compound or the reaction product of phosphorus trichloride with a trialkyl or a triaryl phosphite.

The hydoxy compound has the general formula R³OH, wherein R³ is C₁ - C₈ alkyl (eg, methyl, ethyl, butyl, hexyl or 2-ethylhexyl), C₆ - C₁₈ aryl (eg, phenyl) or C₇ - C₁₉ arylkyl, (eg, benzyl or 2-phenylethyl). Preferably, the hydroxy compound may be ethanol or phenol.

Alternatively, the compound containing active hydrogen may be a thiol having the general formula R³SH, wherein R³ is C₁ - C₈ alkyl, C₆ - C₁₈ aryl or C₇ - C₁₉ aralkyl, for example methane thiol, ethane thiol, or thiophenol.

In a further alternative embodiment, the compound containing active hydrogen may be an amino compound having the general formula R³R⁴NH, wherein R³ is C₁ - C₈ alkyl, C₆ - C₁₈ aryl or C₇ - C₁₉ aralkyl and R⁴ is hydrogen, C₁ - C₈ alkyl, C₆ - C₁₈ aryl or C₇ - C₁₉ aralkyl. Examples of such amino compounds include the dialkyl amines, for example dimethylamine, diethylamine or diphenylamine.

Preferably, where the chlorophosphorus compound is made from phosphorus trichloride and a trialkyl or triaryl phosphite, the preferred phosphite is trimethyl phosphite. The reaction is preferably carried out in the presence of a catalyst, preferred catalysts being phosphonium compounds such as tributyl methyl phosphonium chloride or tetrabutyl phosphonium bromide.

The chlorophosphorus reaction product may be phosphorus trichloride. Alternatively, the chlorophosphorus reaction product may be a mono-alkoxy or a mono-aryloxy phosphorus dichloride. The chlorophosphorus reaction product may be used as such for reaction with the unsaturated acid (or salt or anhydride thereof) but may be isolated or purified first. The chlorophosphorus reaction product may be made by addition of the compound containing active hydrogen to phosphorus trichloride at -100°C to 50°C (suitably -100°C to -50°C) with the elimination of byproduct hydrogen chloride, or by reaction of phosphorus trichloride with a trialkyl or triaryl phosphite in the presence of a catalyst. The chlorophosphorus product may be used as prepared, or may be purified.

The reaction stage of the process of the present invention may be carried out with heating at 50 - 150°C (eg, 80 - 120°C) with a reaction time of 0.5 - 10 hours (eg, 0.5 - 5 hours). The process is performed under anhydrous and inert conditions eg, under an inert gas such as nitrogen. Preferably the carboxylic acid is added slowly to the chlorophosphorus reaction product (or the phosphorus trichloride), and then at the end of the addition, the reaction mixture may be heated further.

During the process, any by-product volatiles produced are allowed to vent from the reaction. At the end of the reaction, the reaction product comprises an acid chloride of the carboxy organo phosphonic acid, which acid is usually of formula HO₂C-CR¹H-CR²H-PO₃H₂. The acid chloride is an ester acid chloride when the active hydrogen compound is a hydroxy compound or a thiol, and an amide acid chloride when an amine has been used.

After purification but preferably when present in unpurified reaction product, the acid chloride is hydrolysed by addition to an aqueous medium, eg, water or aqueous acid or alkali to form the corresponding acid or salt, which may then be isolated eg, by evaporation and/or crystallisation. Alternatively, a base can be added to precipitate an insoluble salt.

The overall process can be performed batchwise, especially in a single reactor, with the chlorophosphorus reaction product added first and then the carboxylic acid (or salt or anhydride), and the mixture finally added to water for the hydrolysis stage. The process can also be performed continuously.

The present invention is illustrated by way of following Examples:

### Example 1

Ethanol (1 mol) was added to phosphorus trichloride (1 mol) at -78°C over 1 hour, followed by warming towards room temperature while evaporating hydrogen chloride and ethyl chloride to leave a crude chlorophosphorus reaction product. The reaction product was vacuum-distilled to give a purified ethyl phosphoro dichloridite (containing about 5% of unreacted phosphorus trichloride).

To the purified ethoxy phosphorus dichloride (one equivalent) at 150°C under nitrogen was added acrylic acid (1.4 equivalents) over a period of 1 hour. The reaction mixture obtained was refluxed for 2 hours to give an oily reaction product which is believed to comprise an ester chloride of the carboxy ethyl phosphonic acid.

The reaction product was cooled to 0°C and an excess of water was added, with stirring and external cooling to moderate the exotherm. The water effects hydrolysis which is completed by refluxing the aqueous solution obtained for 1 hour.

Vacuum evaporation left the crude carboxy ethyl phosphonic acid of 86% purity in about 95% yield, based on ethoxy phosphorus dichloride. The crude product contains a small amount of 1,1,3 - triphosphono-n-propan-1-ol and phosphorous and phosphoric acid by-products. The crude product, which may be used as such, was recrystallised from glacial acetic acid to leave a 68% yield of carboxyethyl phosphonic acid (mp 165-6°C) with H and P nmr spectra according with the structure.

### Example 2

The process of Example 1 was repeated with the crude chlorophosphorus reaction product instead of purified ethyl phosphoro dichloridite. The crude carboxy ethyl phosphonic acid product was obtained in 97% yield and 73% purity.

### Example 3

The process of Example 1 was repeated with ethanol replaced by phenol. The reaction of phenoxy phosphorus dichloride with acrylic acid and subsequent work-up were analoguous to those in Example 1, but the organoxyphosphorus dichloride was made in a different way.

Phenol (1 equivalent) was added to purified phosphorus trichloride (6 equivalents) and the resulting mixture stirred for 12 hours at room temperature, prior to refluxing for 2 hours. The reaction product was heated to distil unreacted phosphorus trichloride until the temperature of the residue reacted 135°C; the phenoxy phosphorus dichloride residue was 95% pure.

This dichloride was used in the process with acrylic acid and the product hydrolysed to give a crude carboxy ethyl phosphonic acid of 79% purity in 87% yield.

### Example 4

The process of Example 1 was used with the ethoxy phosphorus dichloride replaced by one equivalent of phosphorus trichloride and the amount of acrylic acid increased to 2.3 equivalents. Crude carboxy ethyl phosphonic acid of 70% purity was obtained in 88% yield, based on phosphorus trichloride.

### Example 5

Phosphorus trichloride. (550g, 4mol) and tributylmethylphosphonium chloride, (7.6g, 0.03mol) were placed in a stirred flask under nitrogen.

The resulting solution was cooled to 10°C and trimethyl phosphite, (248g, 2mol) added over 45 minutes, maintaining the temperature of the solution below 20°C throughout. The product was left to stand at room temperature for 24 hours.

At this stage the composition of the mixture as determined by ³¹P nmr was: phosphorus trichloride, 6.6mol%; methylphosphorodichloridite, 92.3mol%; dimethylphosphorochloridite 1.1mol%.

The product mixture was heated to 90°C and acrylic acid (475g, 6.6mol) added over 1.5 hours. The reaction was then heated to 115°C for one hour before allowing to cool. The product was poured onto 3kg of ice/water to effect hydrolysis, the temperature reaching 50°C at the end of the addition. The resulting aqueous solution was heated to reflux and water distilled out for five hours before final stripping in vacuo.

The product, obtained in quantitative yield as an off-white crystalline solid, showed the following composition by weight: 92.6% 3-phosphonopropionic acid; 3.3% 1,1,3-tirphosphono-n-propan-1-oL, 3.0% phosphorous acid and 1.1% phosphoric acid.

Recrystallisation from two weight equivalents of glacial acetic acid gave pure 3-phosphonopropionic acid in 70% yield, based on methoxy phosphorus dichloride.

### Example 6

Phosphorus trichloride (45.8g, 333mmol) and tributylmethylphosphonium chloride (0.32g, 1.25mmol) were placed in a nitrogen-filled flask equipped with nitrogen line, stirrer and reflux condenser, and triethylphosphite (27.7g, 167mmol) added over 30 minutes, cooling the flask to maintain the reaction temperature below 30°C. Alter standing for 72 hours the resulting ethylphosphorodichloridite was heated to 100°C and acrylic acid (39.6g, 555mmol) added over 30 minutes before heating to 110°C for a further hour. The product oil was cooled before adding it to 250g of ice/water to effect hydrolysis. The resulting aqeous solution was stripped to dryness to give 76.6g of crude product, which showed the following composition by weight: 92.6% 3-phosphonopropionic acid; 3.1% 1,1,3-triphosphono-n-propan-1-ol; 3.8% phosphorous acid and 0.5% phosphoric acid.

The product was recrystallised from 200g of glacial acetic acid to give 3-phosphonopropionic acid in 72% yield based on the starting PCl₃ and treithylphosphite, in 99.2% purity.

## Claims

1. A process for the production of a phosphono organo carboxylic acid, **characterised by** :
(a) A reaction stage, wherein an unsaturated carboxylic acid [or an alkali metal salt, a quaternary ammonium salt or an anhydride of said acid] is heated with a chlorophosphorus reaction product selected from:
(i) phosphorus trichloride and
(ii) a reaction product of phosphorus trichloride with a compound, other than phosphorous acid, containing active hydrogen
to produce a mixture including a phosphono organo carboxylic acid chloride; and
(b) a hydrolysis stage, wherein said mixture is treated with an aqueous medium to produce said phosphono organo carboxylic acid

2. A process according to Claim 1, **characterised in that** the unsaturated carboxylic acid has the general formula R²CH=CR¹CO₂H, wherein R¹ is H or C₁ to C₆ alkyl and R² is H, C₁ to C₆ alkyl, C₆ to C₁₈ aryl or a carboxyl group.

3. A process according to Claim 1 or 2, **characterised in that** the unsaturated carboxylic acid is maleic acid, crotonic acid, methacrylic acid or acrylic acid.

4. A process according to Claim 1, **characterised in that** the unsaturated carboxylic acid is used in the form of the sodium salt of said acid.

5. A process according to Claim 1, **characterised in that** the unsaturated carboxylic acid is used in the form of the tetrabutyl ammonium salt of said acid.

6. The process according to Claim 1, **characterised in that** the unsaturated carboxylic acid is used in the form of a mixed anhydride, a symmetrical anhydride (eg, acrylic anhydride) or a cyclic anhydride (eg, maleic anhydride) of said acid.

7. A process according to any one of Claims 1 to 6, **characterised in that** the chlorophosphorus reaction product is a mono-alkoxy or a mono-aryloxy phosphorus dichloride.

8. A process according to any one of Claims 1 to 6, **characterised in that** the compound containing active hydrogen is a hydroxy compound, a thiol or an amino compound.

9. A process according to Claim 8, **characterised in that** the compound is a hydroxy compound having the general formula R³OH, wherein R³ is C₁ to C₈ alkyl, C₆ to C₁₈ aryl or C₇ to C₁₉ aralkyl, (for example methyl, ethyl, butyl, hexyl, 2-ethylhexyl, phenyl, benzyl or 2-phenylethyl).

10. A process according to Claim 8, **characterised in that** the compound is a thiol having the general formula R³SH wherein R³ is C₁ to C₈ alkyl, C₆ to C₁₈ aryl or C₇ to C₁₉ aralkyl, (for example methane thiol, ethane thiol or thiophenol).

11. A process according to Claim 8, **characterised in that** the compound is an amino compound having the general formula R³R⁴NH, wherein R³ is C₁ to C₈ alkyl, C₆ to C₁₈ aryl or C₇ to C₁₉ aralkyl and R⁴ is hydrogen, C₁ to C₈ alkyl, C₆ to C₁₈ aryl or C₇ to C₁₉ aralkyl, (for example a dialkyl amine).

12. A process according to any one of Claims 1 to 6, **characterised in that** the chlorophosphorus reaction product is made by reacting phosphorus trichloride with a trialkyl or a triaryl phosphite (eg, trimethyl phosphite).

13. A process according to Claim 12, **characterised in that** the chlorophosphorus reaction product is made in the presence of a catalyst (eg, tributylmethylphosphonium chloride or tetrabutylphosphonium bromide).

14. A process according to any one of the preceding Claims, **characterised in that** the reaction stage is carried out at a temperature in the range 50 to 150°C, for example 80 to 120°C.

15. A process according to any one of the preceding Claims, **characterised in that** the reaction time is in the range 0.5 to 10 hours, for example 0.5 to 5 hours.

16. A process according to any one of the preceding claims, **characterised in that** the aqueous medium causing hydrolysis is water, an aqueous acid or an aqueous alkali or an aqueous solution of a base.

## Patentansprüche

1. Ein Verfahren zur Herstellung einer Organophosphonocarbonsäure, **gekennzeichnet** durch:
(a) eine Reaktionsstufe, in welcher eine ungesättigte Carbonsäure [oder ein Alkalimetallsalz, ein quaternäres Ammoniumsalz oder ein Anhydrid dieser Säure] mit einem Chlorphosphor-Reaktionsprodukt erhitzt wird, das ausgewählt ist aus:
(i) Phosphortrichlorid und
(ii) einem Reaktionsprodukt von Phosphortrichlorid mit einer Verbindung, die nicht phosphorige Säure ist und aktiven Wasserstoff enthält,
zur Herstellung einer Mischung, die ein Organophosphonocarbonsäurechlorid enthält, und
(b) eine Hydrolysestufe, in welcher diese Mischung mit einem wässerigen Medium behandelt wird, um die genannte Organophosphono-carbonsäure herzustellen.

2. Ein Verfahren nach Anspruch 1, **dadurch gekennzeichnet**, daß die ungesättigte Carbonsäure die allgemeine Formel R²CH=CR¹CO₂H hat, in welcher R¹ für H oder C₁-C₆-Alkyl und R² für H, C₁-C₆-Alkyl, C₆-C₁₈-Aryl oder eine Carboxylgruppe steht

3. Ein Verfahren nach Anspruch 1 oder 2, **dadurch gekennzeichnet**, daß die ungesättigte Carbonsäure Maleinsäure, Crotonsäure, Methacrylsäure oder Acrylsäure ist.

4. Ein Verfahren nach Anspruch 1, **dadurch gekennzeichnet,** daß die ungesättigte Carbonsäure in Form des Natriumsalzes dieser Säure eingesetzt wird.

5. Ein Verfahren nach Anspruch 1, **dadurch gekennzeichnet,** daß die ungesättigte Carbonsäure in Form des Tetrabutylammoniumsalzes dieser Säure eingesetzt wird.

6. Das Verfahren nach Anspruch 1, **dadurch gekennzeichnet,** daß die ungesättigte Carbonsäure in Form eines gemischten Anhydrids, eines symmetrischen Anhydrids (z.B. Acrylsäureanhydrid) oder eines zyklischen Anhydrids (z.n. Maleinsäureanhydrid) der genannten Säure eingesetzt wird.

7. Ein Verfahren nach einem der Ansprüche 1 bis 6, **dadurch gekennzeichnet,** daß das Chlorphosphor-Rektionsprodukt ein Monoalkoxy- oder ein Monoaryloxy-phosphordichlorid ist.

8. Ein Verfahren nach einem der Ansprüche 1 bis 6, **dadurch gekennzeichnet,** daß die Verbindung, die den aktiven Wasserstoff enthält, eine Hydroxyverbindung, ein Thiol oder eine Aminoverbindung ist.

9. Ein Verfahren nach Anspruch 8, **dadurch gekennzeichnet,** daß die Verbindung eine Hydroxyverbindung mit der allgemeinen Formel R³OH ist, worin R³ für C₁-C₈-Alkyl, C₆-C₁₈-Aryl oder C₇-C₁₉-Aralkyl (zum Beispiel Methyl, Ethyl, Butyl, Hexyl, 2-Ethylhexyl, Phenyl, Benzyl oder 2-Phenylethyl) steht.

10. Ein Verfahren nach Anspruch 8, **dadurch gekennzeichnet,** daß die Verbindung ein Thiol mit der allgemeinen Formel R³SH ist, worin R³ für C₁-C₈-Alkyl, C₆-C₁₈-Aryl oder C₇-C₁₉-Aralkyl (zum Beispiel Methanthiol, Ethanthiol oder Thiophenol) steht.

11. Ein Verfahren nach Anspruch 8, **dadurch gekennzeichnet,** daß die Verbindung eine Aminoverbindung mit der allgemeinen Formel R³R⁴NH ist, worin R³ für C₁-C₈-Alkyl, C₆-C₁₈-Aryl oder C₇-C₁₉-Aralkyl und R⁴ für Wasserstoff, C₁-C₈-Alkyl, C₆-C₁₈-Aryl oder C₇-C₁₉-Aralkyl (zum Beispiel ein Dialkylamin) steht.

12. Ein Verfahren nach einem der Ansprüche 1 bis 6, **dadurch gekennzeichnet,** daß das Chlorphosphor-Reaktionsprodukt durch Umsetzung von Phosphortrichlorid mit einem Trialkyl- oder einem Triarylphosphit (z.B. Trimethylphosphit) hergestellt wird.

13. Ein Verfahren nach Anspruch 12, **dadurch gekennzeichnet,** daß das Chlorphosphor-Reaktionsprodukt in Gegenwart eines Katalysators (z.B. Tributylmethylphosphoniumchlorid oder Tetrabutylphosphoniumbromid) hergestellt wird.

14. Ein Verfahren nach einem der vorhergehenden Ansprüche, **dadurch gekennzeichnet,** daß die Reaktionsstufe bei einer Temperatur im Bereich von 50°C bis 150°C, zum Beispiel zwischen 80°C und 120°C, durchgeführt wird.

15. Ein Verfahren nach einem der vorhergehenden Ansprüche, **dadurch gekennzeichnet,** daß die Reaktionszeit im Bereich von 0,5 bis 10 Stunden, zum Beispiel zwischen 0,5 und 5 Stunden, liegt.

16. Ein Verfahren nach einem der vorhergehenden Ansprüche, **dadurch gekennzeichnet,** daß das die Hydrolyse verursachende wässerige Medium Wasser, eine wässerige Säure oder ein wässeriges Alkali oder eine wässerige Lösung einer Base ist.

## Revendications

1. Procédé de production d'un acide carboxylique organophosphonique, **caractérisé par** :
(a) une étape de réaction, dans laquelle un acide carboxylique insaturé [ou un sel de métal alcalin, un sel d'ammonium quaternaire ou un anhydride dudit acide] est chauffé avec un produit réactif chlorophosphoré choisi parmi :
(i) le trichlorure de phosphore et
(ii) un produit de la réaction du trichlorure de phosphore avec un composé, autre que l'acide phosphoreux, contenant de l'hydrogène actif pour produire un mélange incluant un chlorure d'acide carboxylique organophosphonique; et
(b) une étape d'hydrolyse, dans laquelle ledit mélange est traité avec un milieu aqueux pour produire ledit acide organophosphonique.

2. Procédé selon la revendication 1, **caractérisé en ce que** l'acide carboxylique insaturé a la formule générale R²CH=CR¹CO₂H, dans laquelle R¹ est H ou alcoyle en C₁ à C₆ et R² est H, alcoyle en C₁ à C₆, aryle en C₆ à C₁₈ ou un groupe carboxyle.

3. Procédé selon la revendication 1 ou 2, **caractérisé en ce que** l'acide carboxylique insaturé est l'acide maléique, l'acide crotonique, l'acide méthacrylique ou l'acide acrylique.

4. Procédé selon la revendication 1, **caractérisé en ce que** l'acide carboxylique insaturé est utilisé sous la forme du sel de sodium dudit acide.

5. Procédé selon la revendication 1, **caractérisé en ce que** l'acide carboxylique insaturé est utilisé sous la forme du sel de tétrabutylammonium dudit acide.

6. Procédé selon la revendication 1, **caractérisé en ce que** l'acide carboxylique insaturé est utilisé sous la forme d'un anhydride mélangé, un anhydride symétrique (par exemple, l'anhydride acrylique) ou un anhydride cyclique (par exemple, l'anhydride maléique) dudit acide.

7. Procédé selon l'une quelconque des revendications 1 à 6, **caractérisé en ce que** le produit réactif chlorophosphoré est un dichlorure de monoalcoxyou monoaryloxyphosphore.

8. Procédé selon l'une quelconque des revendications 1 à 6, **caractérisé en ce que** le composé contenant l'hydrogène actif est un composé hydroxy, un thiol ou un composé amino.

9. Procédé selon la revendication 8, **caractérisé en ce que** le composé est un composé hydroxy ayant la formule générale R³OH, dans laquelle R³ est alcoyle en C₁ à C₈, aryle en C₆ à C₁₈ ou aralcoyle en C₇ à C₁₉ (par exemple, méthyle, éthyle, butyle, hexyle, 2-éthylhexyle, phényle, benzyle ou 2-phényléthyle).

10. Procédé selon la revendication 8, **caractérisé en ce que** le composé est un thiol ayant la formule générale R³SH, dans laquelle R³ est alcoyle en C₁ à C₈, aryle en C₆ à C₁₈ ou aralcoyle en C₇ à C₁₉ (par exemple, méthanethiol, éthanethiol ou thiophénol).

11. Procédé selon la revendication 8, **caractérisé en ce que** le composé est un composé amino ayant la formule générale R³R⁴NH, dans laquelle R³ est alcoyle en C₁ à C₈, aryle en C₆ à C₁₈ ou aralcoyle en C₇ à C₁₉, et R⁴ est hydrogène, alcoyle en C₁ à C₈, aryle en C₆ à C₁₈ ou aralcoyle en C₇ à C₁₉ (par exemple, une dialcoylamine).

12. Procédé selon l'une quelconque des revendications 1 à 6, **caractérisé en ce que** le produit réactif chlorophosphoré est obtenu par réaction du trichlorure de phosphore avec un trialcoylphosphite ou un triarylphosphite (par exemple, le triméthylphosphite).

13. Procédé selon la revendication 12, **caractérisé en ce que** le produit réactif chlorophosphoré est obtenu en présence d'un catalyseur (par exemple, le chlorure de tributylméthylphosphonium ou le bromure de tétrabutylphosphonium).

14. Procédé selon l'une quelconque des revendications précédentes, **caractérisé en ce que** l'étape de réaction est effectuée à une température dans l'intervalle de 50 à 150°C, par exemple 80 à 120°C.

15. Procédé selon l'une quelconque des revendications précédentes, **caractérisé en ce que** le temps de réaction est dans l'intervalle de 0,5 à 10 heures, par exemple 0,5 à 5 heures.

16. Procédé selon l'une quelconque des revendications précédentes, **caractérisé en ce que** le milieu aqueux provoquant l'hydrolyse est l'eau, un acide aqueux ou un alcali aqueux ou une solution aqueuse d'une base.
